# EUROPEAN PATENT SPECIFICATION

(11) **EP 4 260 949 B1**
(45) Date of publication and mention of the grant of the patent: **24.12.2025**
(21) Application number: 22898790.5
(22) Date of filing: 07.09.2022
(51) Int. Cl.: B05C 5/02, H01M 4/04, B05C 9/06

(54) **DUAL SLOT DIE COATER**
DOPPELSCHLITZDÜSENBESCHICHTER
COUCHEUSE À FILIÈRE À DOUBLE FENTE

(30) Priority: 29.11.2021 KR 20210167687; 13.06.2022 KR 20220071278
(43) Date of publication of application: 18.10.2023
(73) Proprietor: LG Energy Solution, Ltd., Seoul 07335 (KR)
(72) Inventor: LEE, Taek-Soo, Daejeon 34122 (KR); KIM, Young-Gon, Daejeon 34122 (KR); YOU, Seong-Jae, Daejeon 34122 (KR); LEE, Do-Yeon, Daejeon 34122 (KR); JEON, Shin-Wook, Daejeon 34122 (KR); JO, Young-Joon, Daejeon 34122 (KR); CHOY, Sang-Hoon, Daejeon 34122 (KR)
(74) Representative: Plasseraud IP
(86) International application number: PCT/KR2022/013465
(87) International publication number: WO 2023/096106

(56) References cited:
- WO-A1-2022/065890
- WO-A1-2022/145652
- JP-A- 2019 107 606
- JP-A- 2019 107 606
- JP-A- 2020 131 082
- JP-A- 2020 131 084
- JP-A- 2021 102 177
- JP-A- H06 142 588
- US-B2- 7 033 644

## Description

### TECHNICAL FIELD

The present disclosure relates to a dual slot die coater capable of simultaneously forming two or more layers by wetting, and more particularly, to a dual slot die coater of a vertical die type for delivering a coating solution in the opposite direction of gravity. The present application claims priority to Korean Patent Application No. 2021-0167687 filed on November 29, 2021 in the Republic of Korea and Korean Patent Application No. 10-2022-0071278 and filed on June 13, 2022 in the Republic of Korea.

### BACKGROUND ART

With the increasing technology development and the growing demand for mobile devices, the demand for secondary batteries as an energy source is rapidly increasing, and such secondary batteries essentially include an electrode assembly which is a power generation element. The electrode assembly includes a positive electrode, a separator and a negative electrode stacked at least once, and the positive electrode and the negative electrode are prepared by coating and drying a positive electrode active material slurry and a negative electrode active material slurry on a current collector made of an aluminum foil and a current collector made of a copper foil, respectively. For the uniform charging/discharging characteristics of the secondary batteries, it is necessary to uniformly coat the positive electrode active material slurry and the negative electrode active material slurry on the current collector, and slot die coaters have been used.

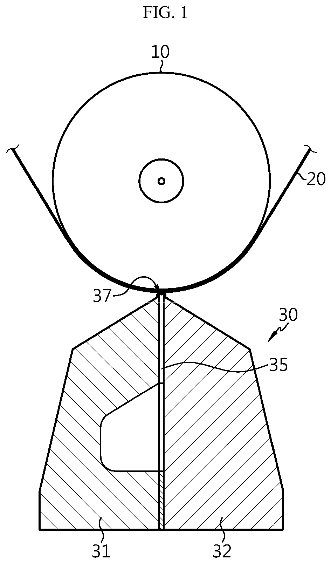

FIG. 1 is a cross-section view showing the conventional slot die coater.

Referring to FIG. 1, an electrode manufacturing method using the conventional slot die coater 30 includes coating the active material slurry from the slot die coater 30 onto the current collector 20 transferred by a coating roll 10. The active material slurry from the slot die coater 30 is coated over one surface of the current collector 20 to form an active material layer. The slot die coater 30 includes two die blocks 31 and 32 and a slot 35 between the two die blocks 31 and 32, and may deliver one type of active material slurry through an exit port 37 in communication with the slot 35 to form a layer of electrode active material. Compared to bar coating or comma coating, the slot die coater achieves high-speed coating, and due to this advantage, it is widely used from a perspective of high productivity. The slot die coater shown in FIG. 1 is a vertical die type of delivering the active material slurry in the opposite direction of gravity.

To manufacture secondary batteries with high energy density, the thickness of the active material layer which was about 130 µm has gradually increased up to 300 µm. When the thick active material layer is formed by the conventional slot die coater 30, migration of a binder and a conductive material in the active material slurry gets more severe during drying, and a final electrode is manufactured non-uniformly. To solve this problem, when coating the active material layer at a small thickness and drying and repeating this process one on top of the other, it takes a long time to perform coating twice. To improve both electrode performance and productivity, a dual slot die coater capable of simultaneously coating two types of active material slurries is required.

Since a slot die coater has a slot at a coupled surface of the die blocks, to include two slots like a dual slot die coater, basically three die blocks are needed. A process using the dual slot die coater is quite difficult to form each active material layer to a desired thickness due to using the active material slurry simultaneously exiting different exit ports in communication with the two slots, respectively.

In particular, die lip alignment at the front end of each die block is important. The die lip alignment is made by assembling and aligning the die blocks by inserting a block or spacer or adjusting the position using a bolt. However, inserting the block or spacer has a plurality of conditions for matching many contact surfaces for die lip alignment, so it is difficult simply on the basis of probability, and the adjustment function using a bolt takes time and greatly relies on the operator's skills, resulting in low reproducibility.

Accordingly, the corresponding industry has a need for dual slot die coaters for more easy and accurate die lip alignment.

JP 2019 107606 A and JP 2021 102177 A disclose die coater of the stacked die type.

### DISCLOSURE

### Technical Problem

The present disclosure is designed to solve the above-described problem, and therefore the present disclosure is directed to providing a dual slot die coater that is easy to align die lips.

However, the problems to be solved by the present disclosure are not limited to the above problems, and other problems that are not mentioned will be clearly understood by those skilled in the art from the following description.

The invention is as defined by the appended claims.

### Technical Solution

To solve the above-described problem, the dual slot die coater of the present invention includes a first slot and a second slot to deliver a coating solution in an opposite direction of gravity, and includes a first die block vertically installed and integrally formed with a base at a rear of an upper surface of the base; a second die block positioned in contact with the base in front of the first die block to form the first slot between the second die block and the first die block; and a third die block positioned in contact with the base in front of the second die block to form the second slot between the third die block and the second die block.

**In** an embodiment, a lower surface of the second die block and a lower surface of the third die block is in contact with a top surface of the base such that the top surface is completely covered.

In another embodiment, a lower surface of the second die block and a lower surface of the third die block is in intermittent contact with the base.

In this instance, a pressing element may be connected to a bottom of the base.

The pressing element may be a servomotor.

In the present disclosure, the dual slot die coater may further include a first shim between the first die block and the second die block to form the first slot and a second shim between the dual slot die coater to form the second slot, wherein the first shim and the second shim have an open portion which is at least cut at an area.

In this instance, the area may be intermittently cut to form a plurality of open portions.

In a preferred example, reinforcements may be provided on a lower surface of the second die block for intermittent contact with the base and a bending space may be formed between the reinforcements. Reinforcements may be provided on a lower surface of the third die block for intermittent contact with the base and a bending space may be formed between the reinforcements.

In this preferred example, a servomotor may be connected to a bottom of the base to deform the bending space. More preferably, the servomotor may be connected to a center of the bottom of the base.

The plurality of reinforcements may be in a lengthwise direction of the dual slot die coater. Preferably, the plurality of reinforcements may be symmetrical in the lengthwise direction with respect to a center in the lengthwise direction of the dual slot die coater. Preferably, a distance between the reinforcements at a central area among the plurality of reinforcements may be larger than a distance between the other reinforcements.

In the present disclosure, the first die block may include a first manifold which accommodates a first coating solution and is in communication with the first slot, and the third die block may include a second manifold which accommodates a second coating solution and is in communication with the second slot.

In the dual slot die coater according to the present disclosure, a bolt may be vertically installed into a contact surface between the base and the second die block, and a bolt may be vertically installed into a contact surface between the base and the third die block.

The first slot may be perpendicular to the base.

The second die block may be right triangular in cross section.

The first die block, the second die block and the third die block may include a first die lip, a second die lip and a third die lip which form front ends, respectively, and the first die lip, the second die lip and the third die lip may be disposed on a same straight line.

A thickness of the third die lip is preferably larger than a thickness of the first die lip and a thickness of the second die lip.

A second exit port in communication with the second slot may be between the third die lip and the second die lip, a first exit port in communication with the first slot may be between the second die lip and the first die lip, the second coating solution may be delivered onto a substrate through the second exit port, the first exit port may be spaced apart from the second exit port on a downstream side of a coating direction, and the first coating solution may be delivered onto the substrate through the first exit port.

### Advantageous Effects

According to the present disclosure, since the die blocks are placed in contact with the base, it is easy to align the die lips. It is possible to prevent the position mismatch between the die blocks, and always maintain the distance between the die lip and the substrate, i.e., the coating gap at a desired level. It is possible to achieve uniform die lip alignment at each assembly and maintain without a change during the process, thereby preventing the coating gap deviation in the widthwise direction perpendicular to the movement direction of the substrate.

Accordingly, according to the present disclosure, it is possible to always maintain the uniform coating gap by simple assembly manipulation of coupling the die blocks without needing to disassemble and re-assemble the die blocks which are structurally vulnerable due to their small thickness when adjusting the coating gap or use an auxiliary device such as a block or spacer.

According to the present disclosure, it is possible to maintain the uniform (±2%) coating gap, taking into account the deformation of the die block by the pressure when delivering the active material slurry, thereby uniformly controlling the coating amount and the resultant coating quality. Accordingly, it is possible to obtain coated products, and in particular, electrodes for secondary batteries with uniform quality by using the dual slot die coater having the uniform coating gap.

According to an aspect of the present disclosure, it is possible to provide the dual slot die coater having the minimum condition of assembly alignment, namely, 1 contact surface fastening, and a structure having no need for position adjustment using a bolt. The adjustment function using a bolt takes time to adjust, greatly relies on the operator's skills and results in low reproducibility. According to the present disclosure, it is possible to achieve die lip alignment without needing to adjust the position using a bolt, thereby eliminating the time required to adjust and reliance on the operator's skills, and improving reproducibility.

According to another aspect of the present disclosure, it is possible to provide a space for bending as well as 1 contact surface fastening. Bending is made by deforming a location for alignment, and according to the present disclosure, it is possible to deform with high uniformity using the pressing element for controlling the coating uniformity in the widthwise direction. As described above, according to the present disclosure, it is possible to control the deformation of the die blocks very uniformly, thereby improving the coating uniformity in a straightforward manner.

As described above, according to the present disclosure, even under the high pressure when delivering the active material slurry, though the thin die blocks are used, it is possible to maintain the coating gap once it is adjusted. In particular, the vertical die type suffers an increase in the distance between the die blocks when delivering the slurry, but the present disclosure can prevent the increase in the distance between the die blocks, thereby ensuring coating workability and reproducibility.

Using the dual slot die coater, it is possible to uniformly form a coating layer, in particular, an active material layer to a desired thickness, and preferably, it is possible to simultaneously coat two types of active material slurries, thereby improving the performance and productivity.

As described above, when the dual slot die coater of the present disclosure is used to coat the active material slurry on the current collector while moving the current collector to manufacture an electrode of a secondary battery, it is possible to achieve uniform coating under high-speed or wide-scale coating conditions.

### DESCRIPTION OF DRAWINGS

The accompanying drawings illustrate an exemplary embodiment of the present disclosure and together with the following detailed description, serve to provide a further understanding of the technical features of the present disclosure, and thus, the present disclosure is not construed as being limited to the drawing.
FIG. 1 is a schematic cross-sectional view of a dual slot die coater according to the related art.
FIG. 2 is a perspective view of a dual slot die coater according to an embodiment of the present disclosure.
FIG. 3 is a cross-sectional view of a dual slot die coater according to an embodiment of the present disclosure.
FIG. 4 is an enlarged diagram of section A in FIG. 3.
FIG. 5 is a perspective view of a dual slot die coater according to another embodiment of the present disclosure.
FIG. 6 is a cross-sectional view of FIG. 5 taken along the line VI-VI'.
FIG. 7 is a cross-sectional view of FIG. 5 taken along the line VII-VII'.
FIG. 8 is a flowchart of the assembly steps of a dual slot die coater according to another embodiment of the present disclosure.
FIGS. 9 to 12 are diagrams showing each assembly step of a dual slot die coater according to another embodiment of the present disclosure.
FIGS. 13 to 15 are diagrams for helping a understanding of the structure of die blocks.
FIG. 16 is a cross-sectional view of a dual slot die coater according to comparative example.
FIGS. 17 to 20 are diagrams showing each assembly step of a dual slot die coater according to comparative example.
FIG. 21 shows the die change time shortening effect through die block structure/assembly simplification design in another embodiment of the present disclosure compared to comparative example.
FIG. 22 shows the electrode quality improvement effect through assembly quality improvement in another embodiment of the present disclosure compared to comparative example.
FIG. 23 is a diagram for analyzing the influence of the operation of a servomotor after bolting in comparative example and another embodiment of the present disclosure.
FIG. 24 is a graph showing the coating gap directional deformation comparison (µm) by the operation of a servomotor in comparative example and another embodiment of the present disclosure.

### BEST MODE

Hereinafter, an exemplary embodiment of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Like reference numerals indicate like elements. Additionally, in the drawings, the elements are exaggerated in thickness, proportion and dimension of for effective description of the technical subject matter.

A dual slot die coater of the present disclosure includes a first slot and a second slot to deliver a coating solution in the opposite direction of gravity, and is configured to coat a coating solution in a double layer on a substrate. In the following description, the 'substrate' is a current collector, and the 'coating solution' is an active material slurry. Both a first coating solution and a second coating solution are an active material slurry, and they may have the same or different compositions (types of an active material, a conductive material and a binder), contents (an amount of each of the active material, the conductive material and the binder) or properties. The dual slot die coater of the present disclosure is optimal for electrodes manufactured by simultaneous coating of two types of active material slurries or pattern coating by coating two types of active material slurries in an alternating manner. However, the scope of the present disclosure is not necessarily limited thereto. For example, the substrate may be a porous base that constitutes a separator, and the first coating solution and the second coating solution may be organics having different compositions or properties. That is, in case that thin film coating is required, the substrate, the first coating solution and the second coating solution are not limited to particular types.

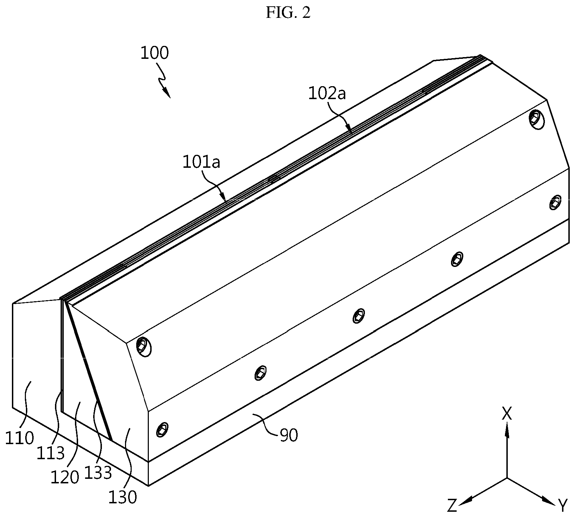

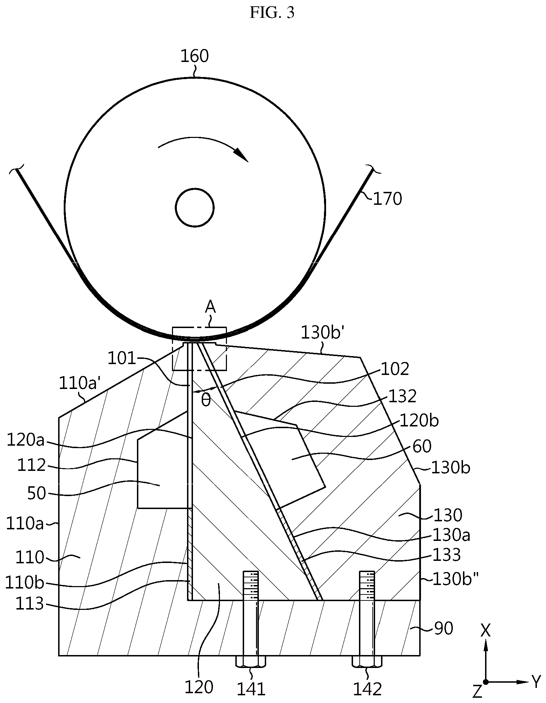

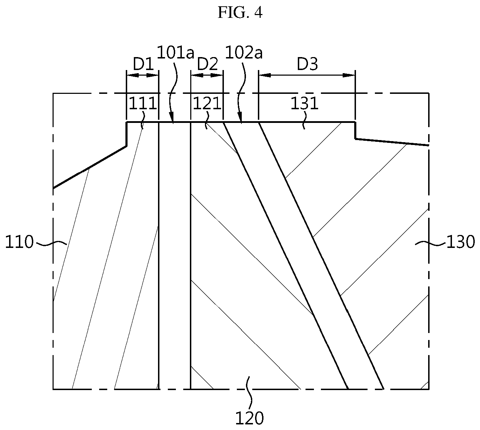

FIG. 2 is a perspective view of a dual slot die coater according to an embodiment of the present disclosure, and FIG. 3 is a cross-sectional view of the dual slot die coater according to an embodiment of the present disclosure. FIG. 4 is an enlarged diagram of section A in FIG. 3.

To begin with, referring to FIGS. 2 and 3, the dual slot die coater 100 according to an embodiment of the present disclosure is configured to deliver the coating solution in the opposite direction of gravity, and includes the first slot 101 and the second slot 102. The dual slot die coater 100 may simultaneously or alternately deliver and coat a same type of coating solution or two different types of coating solutions on the substrate 170 through the first slot 101 and the second slot 102.

For example, the first coating solution 50 which is a first electrode active material slurry and the second coating solution 60 which is a second electrode active material slurry may be simultaneously coated with a double layer structure on the substrate 170 by continuously bringing them into contact with the surface of the substrate 170 to be coated while moving the substrate 170 by rotating a rotatable coating roll 160 at the front side of the dual slot die coater 100. The first coating solution 50 is coated on the substrate 170 to form a lower slurry layer, and almost at the same time, the second coating solution 60 is coated on the lower slurry layer to form an upper slurry layer.

The dual slot die coater 100 is installed such that the delivery direction (X direction) of the coating solution or the active material slurry is almost vertical (almost: ± 5°). In an embodiment of the present disclosure, the X-axis direction shown in the drawing refers to the delivery direction of the coating solution, the Z-axis refers to the lengthwise direction of the dual slot die coater 100, and the Y-axis direction refers to a horizontal direction perpendicular to the X-axis direction and the Z-axis direction, and in particular, indicates a direction from a first die block 110 of the dual slot die coater 100 toward a third die block 130, and for convenience, may be the front side of the dual slot die coater 100.

The dual slot die coater 100 includes a base 90. The first die block 110 is vertically installed integrally with the base 90 at the rear part of the upper surface of the base 90. The first die block 110 is a plate shaped structure extended along the lengthwise direction. The first die block 110 is placed on the base 90 and assembled together, and when the base 90 and the first die block 110 are put together, it is not necessary to align relative to the base 90 and they may be handled as one, making it easy to handle. The first die block 110 that is integrally formed with the base 90 may be referred to as a body block, and may be called an upper plate. The XY cross section of the first die block 110 may be approximately L shaped.

The second die block 120 is positioned in contact with the base 90 in front of the first die block 110 to form the first slot 101 between the second die block 120 and the first die block 110. To define the first slot 101, a first shim 113 is between the second die block 120 and the first die block 110.

A gap may be formed by the first shim 113 between the second die block 120 and the first die block 110, and is the first slot 101 corresponding to a passage through which the coating solution flows. In this case, the thickness of the first shim 113 determines the vertical width (a slot gap) of the first slot 101. The first shim 113 may be referred to as an upper shim.

The first shim 113 may have an open portion which is at least cut at an area, and may be at the remaining portion except one side in the edge area of the facing surface of each of the first die block 110 and the second die block 120. Accordingly, a first exit port 101a through which the coating solution exits is only formed between the front end of the first die block 110 and the front end of the second die block 120.

As shown in FIG. 4, the front end of the first die block 110 and the front end of the second die block 120 are defined as a first die lip 111 and a second die lip 121, respectively, and in other words, the first exit port 101a is formed by the spacing between the first die lip 111 and the second die lip 121. The first die lip 111 and the second die lip 121 may be a cuboid extended along the lengthwise direction and having the flat upper surface.

For reference, the first shim 113 acts as a gasket to prevent the leakage of the coating solution through the gap between the first die block 110 and the second die block 120 except the area where the first exit port 101a is formed, and thus is preferably made of a material having sealing ability.

The second die block 120 is a block disposed in the middle of the die blocks of the dual slot die coater 100, and is a plate interposed between the first die block 110 and the third die block 130 to form a dual slot. The second die block 120 of this embodiment is a right triangle in cross section, but its shape is not necessarily limited thereto, and for example, the second die block 120 may be an isosceles triangle in cross section. When the second die block 120 is a right triangle in cross section, the first slot 101 is aligned almost perpendicular to the substrate 170, making it easy to control the delivery of the coating solution through the first slot 101.

The second die block 120 is a plate shaped structure extended along the lengthwise direction. A first surface 120a of the second die block 120 facing the first die block 110 is placed almost perpendicularly to the base 90. That is, the first surface 120a of the second die block 120 is a vertical surface. A second surface 110b of the first die block 110 facing the first surface 120a of the second die block 120 and an opposite first surface 110a (i.e., a surface that forms the rear surface of the outer peripheral surface of the dual slot die coater 100) are placed almost perpendicularly to the base 90. That is, the first surface 110a and the second surface 110b of the first die block 110 are also vertical surfaces. Accordingly, the first slot 101 is perpendicular to the base 90. The first surface 120a of the second die block 120 and the first surface 110a and the second surface 110b of the first die block 110 are almost parallel to each other to form a stable and balanced structure as a whole. The first die block 110 has an inclined surface 110a' that is inclined toward the delivery direction at an upper part of the first surface 110a, and thus the upper part of the first die block 110 is almost triangular in cross section and tapered toward the first die lip 111. The second die block 120 may be referred to as an inner die and may be also called an intermediate plate.

The first die block 110 includes a first manifold 112 having a predetermined depth on the second surface 110b, and the first manifold 112 is in communication with the first slot 101. The first manifold 112 is a space from the second surface 110b of the first die block 110 facing the second die block 120 toward the first surface 110a opposite the second surface 110b. The first manifold 112 is a chamber of a recessed shape in the first die block 110 and accommodates the first coating solution. The first manifold 112 is connected to a first coating solution supply chamber (not shown) installed outside with a supply pipe and is supplied with the first coating solution. When the first manifold 112 is fully filled with the first coating solution, the flow of the first coating solution is guided along the first slot 101 and exits the first exit port 101a.

The first die block 110 may further include an air vent (not shown) therethrough and the air vent may be connected to the first manifold 112. The air vent is configured to remove air bubbles included in the first coating solution within the first manifold 112. The air vent may be formed by simply drilling a hole in the first die block 110, or may be formed by inserting a hollow pipe into the hole.

The third die block 130 is positioned in contact with the base 90 in front of the second die block 120 to form the second slot 102 between the third die block 130 and the second die block 120. To define the second slot 102, a second shim 133 is between the third die block 130 and the second die block 120. The second slot 102 is formed in an area of contact between the second die block 120 and the third die block 130. That is, the second slot 102 is formed by putting the third die block 130 and the second die block 120 together.

In the same way as the first slot 101, a gap may be formed by the second shim 133 between the second die block 120 and the third die block 130 and is the second slot 102 corresponding to a passage through which the coating solution flows. In this case, the thickness of the second shim 133 determines the vertical width (the slot gap) of the second slot 102. The second shim 133 may be referred to as a lower shim.

Additionally, the second shim 133 has a similar structure to the first shim 113, and has an open portion which is at least cut at an area, and is only at the remaining portion except one side in the edge area of the facing surface of each of the second die block 120 and the third die block 130. Likewise, the peripheral direction except the front side of the second slot 102 is blocked and a second exit port 102a is only formed between the front end of the second die block 120 and the front end of the third die block 130.

Referring to FIG. 4, the front end of the third die block 130 is defined as a third die lip 131, and in other words, the second exit port 102a is formed by the spacing between the second die lip 121 and the third die lip 131. The third die lip 131 may be also a cuboid extended along the lengthwise direction and having the flat upper surface.

As described above, the second exit port 102a in communication with the second slot 102 is between the third die lip 131 and the second die lip 121, the first exit port 101a in communication with the first slot 101 is between the second die lip 121 and the first die lip 111, the second coating solution 60 that forms the lower slurry layer is delivered onto the substrate 170 through the second exit port 102a, the first exit port 101a is spaced apart from the second exit port 102a on the downstream side of the coating direction, and the first coating solution 50 that forms the upper slurry layer is delivered onto the lower slurry layer on the substrate 170 through the first exit port 101a. When the first and second coating solutions 50, 60 such as the electrode active material slurry are supplied while moving the substrate 170 from the third die lip 131 toward the first die lip 111, an electrode may be formed by forming the upper slurry layer on the lower slurry layer.

The third die block 130 is also a plate-shaped structure extended along the lengthwise direction. Additionally, a second surface 120b of the second die block 120 facing the third die block 130, and a first surface 130a of the third die block 130 facing the second surface 120b of the second die block 120 and an opposite second surface 130b (i.e., a surface that forms the front surface of the outer peripheral surface of the dual slot die coater 100) are almost parallel to each other to form a stable and balanced structure in shape. The third die block 130 has an inclined surface 130b' that is inclined toward the delivery direction at the upper part of the second surface 130b. The upper part of the third die block 130 is almost triangular in cross section and tapered toward the third die lip 131. A surface 130b" below the second surface 130b in the third die block 130 is placed almost perpendicularly to the base 90. The third die block 130 may be referred to as an outer die, and may be also called a lower plate.

Additionally, the third die block 130 includes a second manifold 132 having a predetermined depth on the first surface 130a facing the second die block 120 and the second manifold 132 is communication with the second slot 102. The second manifold 132 is a space from the first surface 130a of the third die block 130 facing the second die block 120 toward the second surface 130b opposite the first surface 130a. The second manifold 132 is a chamber of a recessed shape in the third die block 130, and accommodates the second coating solution. Although not shown in the drawing, the second manifold 132 is connected to a second coating solution supply chamber installed outside with a supply pipe and is supplied with the second coating solution. When the second manifold 132 is fully filled with the second coating solution from the external source along the pipe shaped supply pipe, the flow of the second coating solution is guided along the second slot 102 in communication with the second manifold 132 and exits the second exit port 102a.

The third die block 130 may further include an air vent (not shown) therethrough and the air vent may be connected to the second manifold 132. The air vent is configured to remove air bubbles included in the second coating solution within the second manifold 132. The air vent may be formed by simply drilling a hole in the third die block 130, or may be formed by inserting a hollow pipe into the hole.

The second slot 102 and the first slot 101 form a predetermined angle, and the angle may be approximately 20° to 70°. The second slot 102 and the first slot 101 meet at a point and the second exit port 102a and the first exit port 101a may be at the intersection point. Accordingly, the first coating solution 50 and the second coating solution 60 may be delivered to almost only one spot.

An angle θ between the second surface 120b of the second die block 120 facing the third die block 130 and the first surface 120a of the second die block 120 facing the first die block 110 is preferably in the range in which a turbulent flow is not formed immediately after the second coating solution 60 exits the second exit port 102a and the first coating solution 50 exits the first exit port 101a at the same time. When the angle θ is too small, the second die block 120 is too thin and thus is very vulnerable to deformation and distortion. The angle θ may determine the angle between the second slot 102 and the first slot 101, and may be approximately 20° to 70°. Preferably, the angle θ may be 25°. An angle between the second surface 110b and the inclined surface 110a' of the first die block 110 may be 70°. An angle between the first surface 130a and the inclined surface 130b' of the third die block 130 may be 60°. According to this configuration, the die blocks 110, 120, 130 in combination have an approximately rectangular prism shape as a whole, and only the front side where the coating solution exits is inclined toward the substrate 170, making it easy to deal with the coating solution when the coating solution flows down, and the shape after assembly becomes approximately similar to a slot die coater having a single slot, making it possible to commonly use a slot die coater support.

The first and second manifolds 112, 132 are formed in the first die block 110 and the third die block 130, respectively. This configuration may have less influence on deformation of the most structurally vulnerable second die block 120. In addition, when the second die block 120 is divided into a left die and a right die, wherein the left die is configured to move with the first die block 110 and the right die is configured to move with the third die block 130, the left die block and the right die block may be slidable at the interface of the left die and the right die, thereby making it easier to change the position of the first slot 101 and the second slot 102.

A surface opposite the delivery direction of the coating solution in the first die block 110, the second die block 120 and the third die block 130, i.e., the lower surface is placed almost horizontally (YZ plane). Since the die blocks 110, 120, 130 have right angled portions at the edge between surfaces, there are the right angled portions in cross section and the vertical or horizontal surface may be used as the reference surface, making it easy to manufacture or handle and possible to ensure precision.

The die blocks 110, 120, 130 are made of, for example, a SUS material. Materials that are easy to process, such as SUS420J2, SUS630, SUS440C, SUS304 and SUS316L, may be used. The SUS is easy to process, inexpensive and highly resistant to corrosion, and can be formed in a desired shape at low cost.

A bolt 141 may be vertically installed into the contact surface of the base 90 and the second die block 120, and a bolt 142 may be vertically installed into the contact surface of the base 90 and the third die block 130. Additionally, the first die block 110 and the second die block 120 may be held together by a bolt (not shown). The second die block 120 and the third die block 130 may be also held together by a bolt (not shown). When the first die block 110, the second die block 120 and the third die block 130 in combination are held together by the bolts 141, 142, their facing portions may support each other to a high degree of contact, thereby securing by fastening and maintaining very well.

As mentioned above, the dual slot die coater 100 may be made of a SUS material. In general, a SUS assembly is prone to liquid leaks at a coupled surface, and to suppress the leaks, a rubber ring or any other flexible material is disposed between structures to create a seal. However, this sealing method is not suitable to control uniform assembly (for example, an assembly deviation of less than 10 µm), and thus it is difficult to use in the dual slot die coater 100.

By this reason, in the dual slot die coater 100, the die blocks 110, 120, 130 processed with very high precision (straightness, flatness ±5 µm) are assembled by bolting. To prevent liquid leaks, high pressure of about 200 to 350N is desirable for bolting.

According to the present disclosure, it is possible to improve the assembly method. Since all the bolts used to fasten are a non-adjustable fixed type, there is no time loss caused by adjustment, it does not rely on the operator's skills, and it is possible to achieve high reproducibility.

According to the present disclosure, a structural change is made to the die blocks 110, 120, 130 compared to the related art. The lower surface of the second die block 120 and the lower surface of the third die block 130 are in contact with the base 90 over the whole. There is no empty space between the second die block 120 and the base 90. Accordingly, it is possible to support the contact surface between the first die block 110 and the second die block 120 with the first shim 113 interposed between them in the event of a torque by the internal pressure of the dual slot die coater 100. In other words, it is possible to prevent the first slot 101 from getting wider. Likewise, there is no empty space between the third die block 130 and the base 90. Accordingly, it is possible to support the contact surface between the second die block 120 and the third die block 130 with the second shim 133 interposed between them in the event of a torque by the internal pressure of the dual slot die coater 100. In other words, it is possible to prevent the second slot 102 from getting wider.

The conventional slot die coater of vertical die type suffers an increase in distance between the die blocks by the pressure when delivering the coating solution. In the dual slot die coater 100 of the present disclosure, the lower surface of the second die block 120 and the lower surface of the third die block 130 are in contact with the base 90 over the whole, and thus the second die block 120 and the third die block 130 are secured by the base 90, thereby preventing the first slot 101 and the second slot 102 from getting wider. In case that the distance between the die blocks increases and the active material slurry is fed, a non-coated region is intermittently stained with the active material slurry, causing surface defects, but using the dual slot die coater 100 according to the present disclosure, it is possible to form electrodes without surface defects.

In addition, since the second die block 120 and the third die block 130 are in contact with the base 90, according to the present disclosure, it is not necessary to align the die blocks 110, 120, 130 and it is very easy. Since the second die block 120 are the third die block 130 are always in contact with the base 90 without an empty space between them, the position of the die lips 111, 121, 131 is fixed each assembly. Accordingly, die lip alignment is straightforward and accurate and does not rely on the operator.

The vertical lengths of the die blocks 110, 120, 130 may be equal. The vertical length refers to a vertical distance from the lower surface of each die block to the die lip. When the vertical lengths of the die blocks 110, 120, 130 are equal, as shown in FIG. 4, the first die lip 111, the second die lip 121 and the third die lip 131 may be disposed on the same straight line by simply assembling them.

As described above, according to the present disclosure, it is possible to eliminate the need for separate manipulation for die lip alignment. The present disclosure has the minimum condition of assembly alignment, namely, 1 contact surface fastening (the upper surface of the base 90 and the lower surface of the second die block 120, and the upper surface of the base 90 and the lower surface of the third die block 130) and does not need the adjustment function. Additionally, when assembling, the aligned condition is very good.

The coating process using the dual slot die coater 100 needs to prevent the problem with leaking and side ring due to the first and second coating solutions 50, 60 exiting the different exit ports 101a, 102a at the same time. The leaking refers to loss of some of the coating solution on the upstream side outside the die lip, causing instability. This is the loss of the pre-metered coating solution, and it is impossible to predict the final coating thickness. Due to the leaking, the coating solution may stay for a long time and become solid or a coating thickness deviation in the widthwise direction may result. In particular, when the coating solution is delivered under high pressure at the coating gap of a few hundreds of *µ*m level for thin film coating or to reduce the widthwise direction thickness deviation of the coating layer, leaking as described above may get more severe.

An optimal coating area (window margin) is between a leaking area and a side ring area. As the window margin is wider, the productivity is higher. The coating gap greatly affects the size and shape of coating beads between the substrate 170 and the die lips 111, 121, 131 and the location of dynamic contact lines during coating. According to the present disclosure, the coating gap may be uniformly maintained by the alignment of the die lips 111, 121, 131, and the initial conditions may be adjusted such as the properties of the coating solution and the flow rate and speed of the coating solution by increasing the window margin through the size adjustment of the die lips 111, 121, 131, thereby setting the initial conditions more flexibly to prevent leaking.

Preferably, the third die lip thickness D3 is larger than the second die lip thickness D2 and the first die lip thickness D1. Accordingly, the third die lip thickness D3 is larger than the average thickness of the first die lip thickness D1 and the second die lip thickness D2. As described above, the third die lip thickness D3 is largest (D3>D2, D3>D1, D3>(D1+D2)/2). Additionally, the second die lip thickness D2 and the first die lip thickness D1 may be equal.

The third die lip thickness D3: the first die lip thickness D1 may be 1.2 : 1 or more. That is, the third die lip thickness D3 may be at least 1.2 times larger than the first die lip thickness D1. When the third die lip thickness D3 is simply larger than the first die lip thickness D1, the window margin may increase, but when the third die lip thickness D3 is at least 1.2 times larger than the first die lip thickness D1, it is possible to improve the leaking prevention effect. When the third die lip thickness D3 is equal to the first die lip thickness D1 or the first die lip thickness D1 is larger than the third die lip thickness D3, leaking occurs.

The third die lip thickness D3: the second die lip thickness D2 may be 1.2 : 1 or more. That is, the third die lip thickness D3 may be at least 1.2 times larger than the second die lip thickness D2. When the third die lip thickness D3 is simply larger than the second die lip thickness D2, the window margin may increase, but when the third die lip thickness D3 is at least 1.2 times larger than the second die lip thickness D2, it is possible to improve the leaking prevention effect. When the third die lip thickness D3 is equal to the second die lip thickness D2, leaking occurs. When the second die lip thickness D2 is larger than the third die lip thickness D3, leaking does not occur but pattern defects occur.

According to the above-described example, the third die lip thickness D3 is larger than the second die lip thickness D2 and the first die lip thickness D1. The third die lip thickness D3 is largest. The inventors found that as the third die lip thickness D3 increases, the window margin increases. Thus, it is possible to control the coating gap or set the initial conditions more flexibly. Accordingly, according to this configuration, it is possible to improve productivity, and during coating, the dynamic contact lines may be used at different locations depending on a target coating product and quality. According to the present disclosure, since the window margin increases, it is possible to overcome the leaking limitation. Additionally, it is possible to reduce the side ring area. As the coating gap reduces, when the dynamic contact lines move in a direction opposite the coating, leaking occurs at or above a predetermined level, and according to this configuration, it is possible to suppress leaking by increasing the third die lip thickness D3. The electrode active material slurry does not exit and resides in the third die lip 131 longer. According to the present disclosure, it is possible to reduce leaking when the coating gap lacks or the slurry is fed in a large amount relative to the movement speed of the substrate 170.

Each of the average thickness of the lower slurry layer formed by the second coating solution 60 exiting the second exit port 102a and the average thickness of the upper slurry layer formed by the first coating solution 50 exiting the first exit port 101a may be 60 *µ*m or more. Each average thickness may be 200 *µ*m or less. In general, the average particle size of the active material for a secondary battery is about 10*µ*m, but since the particle size follows the common normal distribution, d(90) or d(max) is typically larger than 10*µ*m. Due to including the active material, it is difficult to form the slurry layer less than 40 *µ*m in thickness. When the thickness of the slurry layer is 60 *µ*m or more, it is possible to smoothly coat while preventing the active material from getting stuck in the coating gap being normally maintained. Additionally, when the thickness of the slurry layer is 200 *µ*m or more, it is good but not realistically possible. It is practically difficult to use the coating amount of more than 200 *µ*m in secondary batteries.

For example, the method for coating the electrode active material slurry using the dual slot die coater 100 of the present disclosure is applied to manufacture positive electrodes of secondary batteries. The positive electrode has a structure in which the lower active material layer by the lower slurry layer and the upper active material layer by the upper slurry layer are stacked on the current collector in a sequential order. The lower active material layer contains the conductive material in a large amount, and the upper active material layer contains the conductive material in a smaller amount. In this case, the amount of the conductive material in the lower active material layer may be adjusted in the range of 0.5 to 5 wt%. When the amount of the conductive material in the upper active material layer reduces, it is possible to increase the amount of the active material on the electrode surface and reduce the electrical conductivity below a predetermined level. In particular, when the amount of the conductive material in the upper active material layer is controlled to a very low level of 0.02 wt% or less, it is possible to reduce the exothermic reaction in the event of an internal short circuit of a cell.

In another example, the average particle size P1 of the active material that forms the lower active material layer ranges 50 to 95% of the average particle size P2 of the active material that forms the upper active material layer. In this case, the active material having a smaller particle size is applied to the lower active material layer. The active material having a larger particle size is applied to the upper active material layer to improve the electrolyte solution wettability and induce the smooth movement of ions or holes.

Here, a flow rate ratio of the first coating solution 50 and the second coating solution 60 may be 1:1. The viscosity of the first coating solution 50 and the second coating solution 60 may be 1000 cps or more (1 cps = 0.001 Pa*s).

Since it is necessary to coat the coating solution having the viscosity of 1000 cps or more, the dual slot die coater 100 of the present disclosure is different in structure from devices for coating any other coating solution having lower viscosity, for example, an ordinary resin solution such as a photosensitive emulsion, a magnetic solution, an antireflection or antiglare solution, a solution for enlarging the field of view and a pigment solution for a color filter and cannot be arrived by design modification. The first coating solution 50 and the second coating solution 60 may include graphite, a conductive material, CMC and a binder.

Under the above-described coating conditions, most preferably, the third die lip thickness D3: the second die lip thickness D2: the first die lip thickness D1 is 3:1:1. With the dual slot die coater 100, it is possible to increase the process efficiency of forming the active material layer of double layer structure on the current collector and reduce the defect rate.

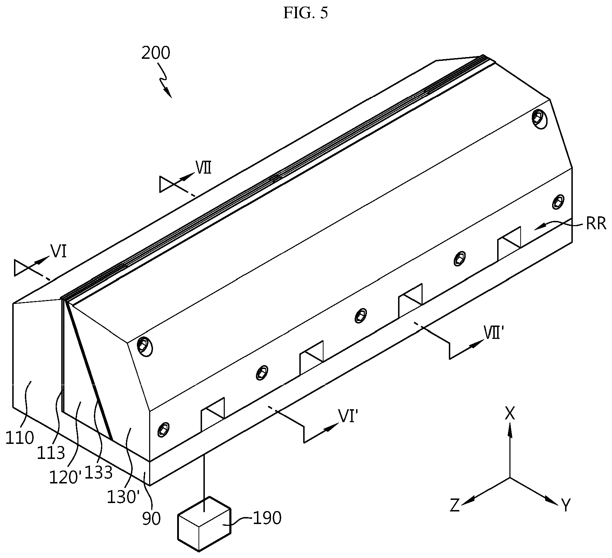

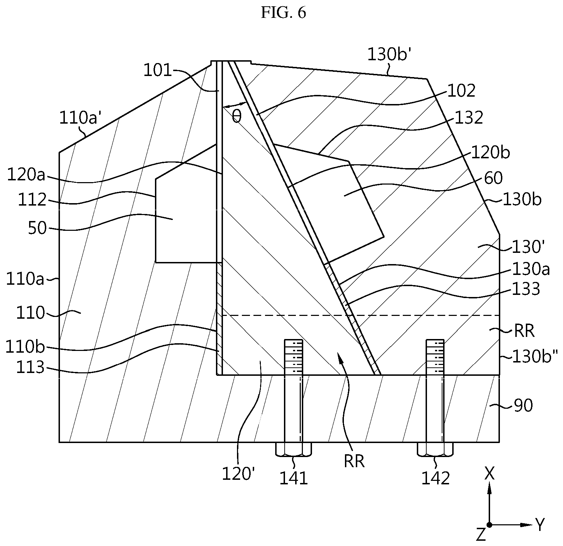

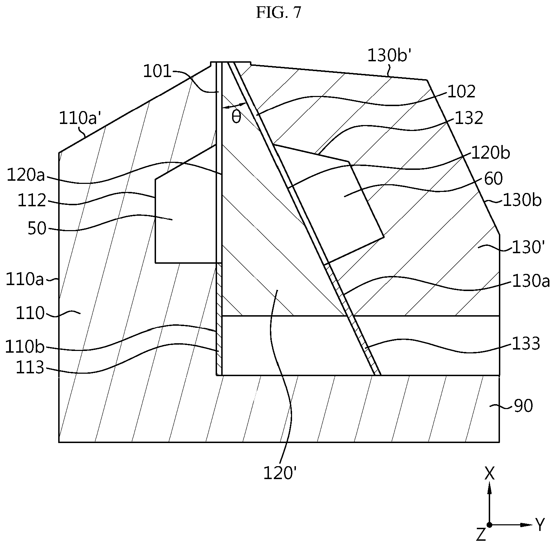

FIG. 5 is a perspective view of the dual slot die coater according to another embodiment of the present disclosure. FIG. 6 is a cross-sectional view of FIG. 5 taken along the line VI-VI', and FIG. 7 is a cross-sectional view of FIG. 5 taken along the line VII-VII'.

The dual slot die coater 200 shown in FIGS. 5 to 7 is different from the dual slot die coater 100 described with reference to FIGS. 2 to 4 in that the lower surface of the second die block 120' and the lower surface of the third die block 130' are in intermittent contact with the base 90. In the dual slot die coater 200, the same reference numerals in the drawings are affixed to the same elements as the dual slot die coater 100 and repeated descriptions are omitted.

In the dual slot die coater 100 described above, the second die block 120 and the third die block 130 extended over the entire vertical length are in contact with the base 90. Due to the contact with the base 90 over the whole, as the contact area increases, the supporting force increases. When compared with the dual slot die coater 100, the dual slot die coater 200 of this embodiment includes the second die block 120' and the third die block 130' of which the lower surface is partially reinforced. That is, the second die block 120' and the third die block 130' are in intermittent contact with the base 90 with a reinforcement RR intermittently added to the bottom of each die block. A plurality of reinforcements RR may be provided on the lower surface of the second die block 120'and the third die block 130'in the lengthwise direction. In the second die block 120', an empty space may be between the reinforcements RR. Also in the third die block 130', an empty space may be between the reinforcements RR. According to this configuration, the contact area with the base 90 is smaller than that of the dual slot die coater 100, but it is possible to reduce stress by the empty space.

The reinforcement RR of the second die block 120' is not separated from the second die block 120', and the reinforcement RR of the third die block 130' is not separated from the third die block 130'. Each of the second die block 120' including the reinforcement RR and the third die block 130' including the reinforcement RR is a monolithic component. That is, it is an integrated seamless component. Accordingly, since it is structurally strong, it is highly stable against external impacts when handling and while in use. In case that the reinforcement RR is not included in each die block and includes two or more respective components, it is necessary to consider the alignment of each component when mounting, and after the assembly of each component, the total tolerance increases.

Meanwhile, the empty space between the reinforcements RR in the second die block 120' and the empty space between the reinforcements RR in the third die block 130' may be a bending space. To this end, a pressing element 190 may be connected to the bottom of the base 90. The pressing element 190 may be preferably a servomotor. The pressing element 190 may be preferably disposed at the center of the base 90. If necessary, the pressing element 190 may be placed closer to the second die block 120' or the third die block 130'. As it is closer to the pressing element 190, it may be subjected to a larger force and may be bent more. The pressing element 190 may push the second die block 120' and the third die block 130' in the delivery direction or pull the second die block 120' and the third die block 130' in a direction opposite the delivery direction.

The plurality of reinforcements RR may be provided in the lengthwise direction of the dual slot die coater 200. According to this configuration, it is possible to form the bending space divided at a plurality of locations in the lengthwise direction of the dual slot die coater 200, thereby achieving uniform bending.

Preferably, the plurality of reinforcements RR may be symmetrical in the lengthwise direction with respect to the center in the lengthwise direction of the dual slot die coater 200. According to this configuration, it is possible to contribute to the uniform bending on two sides with respect to the center in the lengthwise direction of the dual slot die coater 200, thereby avoiding an alignment deviation between the left and right sides, and applying a uniform fastening force by the fastening on the contact surface to the left and right sides.

Preferably, the distance between the reinforcements RR at the central area among the plurality of reinforcements RR may be larger than the distance between the other reinforcements RR. According to this configuration, it is possible to control the coating gap at the center better by increasing the bending at the central area.

Since the injection direction of the coating solution is the center of the die blocks 110, 120', 130', the liquid coating amount at the center is larger than the liquid coating amount at the side, and consequentially, the dual slot die coater 200 may have a non-uniform coating profile in the widthwise direction of the substrate 170 (perpendicular to the MD direction). In other words, the loading of the coating solution may concentrate on the center of the first slot 101 and the second slot 102 in the widthwise direction. In such a case, the coating gap and the consequential loading distribution may be adjusted by pushing or pulling the second die block 120'and the third die block 130' with the pressing element 190 to deform the second die lip 121 and the third die lip 131. When each die block 120', 130' is pushed by the pressing element 190 in the delivery direction, the coating gap at the center may decrease. On the contrary, when each die block 120', 130' is pulled by the pressing element 190 in a direction opposite the delivery direction, the coating gap at the center may increase.

According to the present disclosure, since the second die block 120' and the third die block 130' are kept in contact with the base 90 while allowing deformation of each die block 120', 130' through the bending space defined as the space between the reinforcements RR, it is possible to allow deformation with high uniformity using the pressing element 190 for controlling the coating uniformity in the widthwise direction.

As described above, the dual slot die coater 200 has the minimum condition of assembly alignment, namely, 1 contact surface fastening, and does not need the adjustment function. Furthermore, the dual slot die coater 200 is a die structure having the space for bending. As described above, according to the present disclosure, it is possible to provide the space for bending as well as 1 contact surface fastening. Bending is made by deforming a location for alignment, and according to the present disclosure, it is possible to control the deformation of each plate of the second die block 120' and the third die block 130' very uniformly.

Accordingly, according to the present disclosure, it is possible to easily achieve high coating uniformity in a straightforward manner. As a result, according to the present disclosure, it is possible to improve the electrode quality/yield/utilization rate.

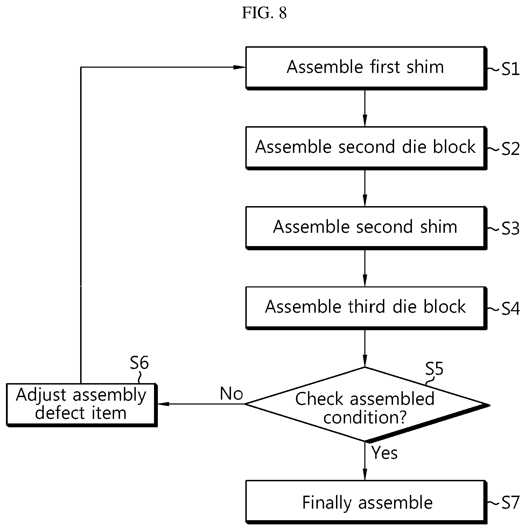

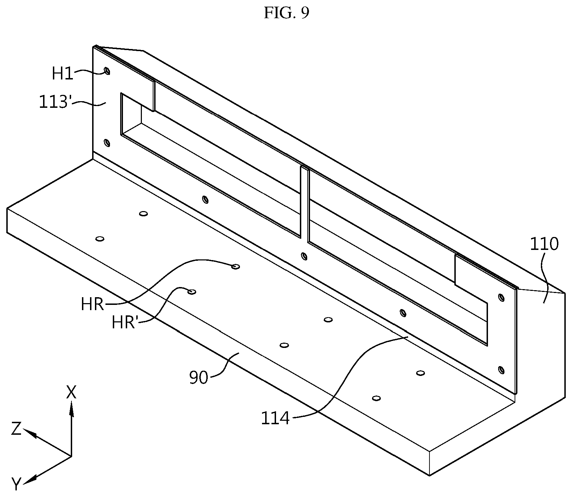

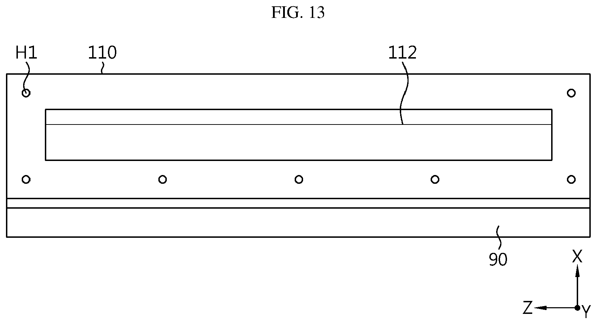

FIG. 8 is a flowchart of the assembly steps of the dual slot die coater according to another embodiment of the present disclosure. FIGS. 9 to 12 are diagrams showing each assembly step of the dual slot die coater according to another embodiment of the present disclosure. The assembly step of FIGS. 9 to 12 will follow the flowchart as shown in FIG. 8. FIGS. 13 to 15 are the drawings for helping a understanding of the structure of the die blocks.

In the dual slot die coater 300 of FIGS. 9 to 12, like reference numerals are affixed to like elements as the dual slot die coaters 100, 200 described previously and repeated descriptions are omitted.

To begin with, the first die block 110 integrally formed with the base 90 is prepared, and according to the step S1 of FIG. 8 and FIG. 9, the first shim 113' is assembled on the first die block 110. FIG. 13 is a front view of the first die block 110 when viewed from the Y axis direction. The first shim 113' is placed on the first manifold 112.

Referring to FIG. 9, the first shim 113' may have roughly an approximately ' 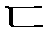 ' shape to define the first exit port 101a, and in particular, has a plurality of open portions (indicated by the arrow) which is intermittently cut at an area. The first shim 113' included in the dual slot die coater 300 of this embodiment has two open portions and accordingly the coating layer may be formed in a pattern shape of two parallel stripes on the substrate 170.

A bolt (not shown) may be used to assemble the first shim 113' and the first die block 110. FIGS. 9 and 13 show that the first shim 113' and the first die block 110 may have a bolt hole H1 for bolting by way of illustration. The bolt may be inserted into each bolt hole H1, and the total number of bolts may be, for example, 13. The bolt is a non-adjustable fixed type, and does not rely on the operator's skills. The bolt may be selected based on the mechanical properties defined according to the required strength (tensile strength). The strength changes depending on the material, and for example, the use of SUS304 may provide the tensile strength of 700 N/mm². Further considering corrosion resistance, a suitable material for the properties may be designated and selected.

The bolt may employ a suitable size according to the bolt tensile force necessary for the corresponding fastening location. The bolt tensile force is a value obtained by multiplying the tensile strength of the bolt by the effective cross-sectional area of the bolt, and the effective cross-sectional area of the bolt changes depending on the shape of the threads (calculated by those skilled in the art, considering the screw inner diameter which is a diameter at the furrow between threads, the screw outer diameter which is a diameter at the thread and the effective diameter corresponding to a value between them). In an embodiment of the present disclosure, the bolt for assembling the first shim 113' and the first die block 110 may include, for example, M5~M16.

Meanwhile, FIG. 9 shows an offset block installation portion 114 included to install a first shim offset block (not shown). The offset block installation portion 114 may be installed at a plurality of locations. The first shim offset block is configured to adjust the offset or the distance between the die lip and the end of the first shim 113' by pulling the first shim 113' in a direction opposite the die lip. The coating width may be changed by adjusting the offset. The smaller the offset, the smaller the landing length over which the coating solution moves, and thus the coating width reduces.

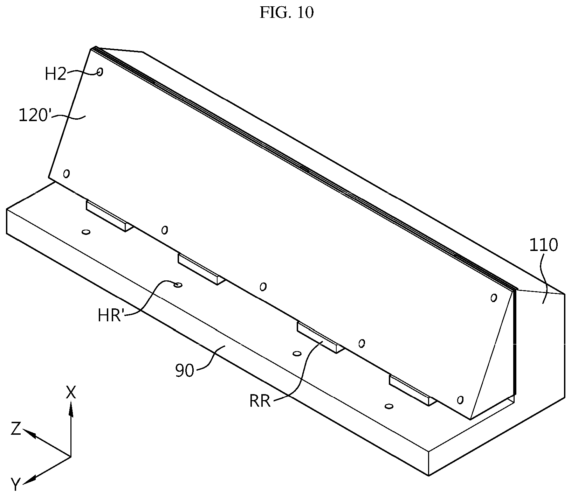

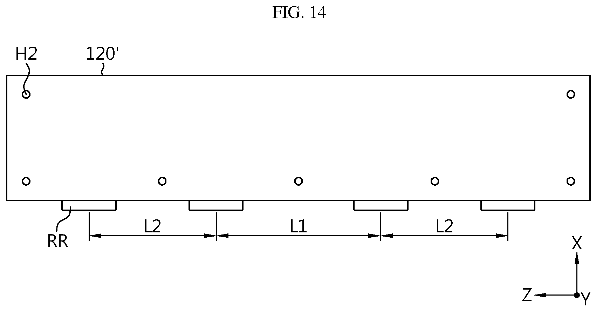

Subsequently, according to the step S2 of FIG. 8 and FIG. 10, the second die block 120' is assembled on the first shim 113'. FIG. 14 is a front view of the second die block 110 when viewed from the Y axis direction.

The second die block 120' may be assembled on the first die block 110. A bolt (not shown) may be used to assemble the second die block 120' and the first die block 110. FIGS. 10 and 14 show that the second die block 120' may have a bolt hole H2 for bolting by way of illustration. The bolt may be inserted into each bolt hole H2, and the total number of bolts may be, for example, 22. The bolt is a non-adjustable fixed type.

Referring to FIGS. 10 and 14, as described above, the second die block 120' has the reinforcement RR for intermittent contact between the lower surface and the base 90 and the bending space between the reinforcements RR. The plurality of reinforcements RR is provided in the lengthwise direction of the dual slot die coater 300. The reinforcements RR may be symmetrical in the lengthwise direction with respect to the center in the lengthwise direction. The distance L1 between the reinforcements RR at the central area among the plurality of reinforcements RR may be larger than the distance L2 between the other reinforcements RR. According to this configuration, it is possible to control the coating gap at the center better by increasing the bending at the center.

A bolt (not shown) may be vertically installed into the contact surface between the second die block 120'and the base 90. Since the contact surface is formed at the reinforcement RR, the bolt may be installed into the reinforcement RR. FIG. 9 shows that the base 90 corresponding to the reinforcement RR may have a bolt hole HR for bolting by way of illustration.

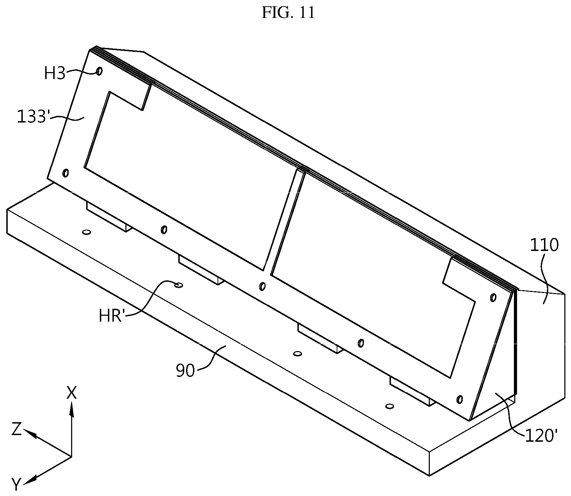

Subsequently, according to the step S3 of FIG. 8 and FIG. 11, the second shim 133' is assembled on the second die block 120'.

The second shim 133'may have roughly an approximately ' 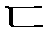 ' shape to define the second exit port 102a, and in particular, has a plurality of open portions (indicated by the arrow) which is intermittently cut at an area. The second shim 133' included in the dual slot die coater 300 of this embodiment has two open portions, and accordingly, the coating layer may be formed in the shape of two parallel patterns. The open portion of the first shim 113' and the open portion of the second shim 133'are in alignment with each other. Accordingly, it is possible to form the upper slurry layer in alignment on the lower slurry layer.

A bolt (not shown) may be used to assemble the second shim 133' and the second die block 120'. FIG. 11 shows that the second shim 133' may have a bolt hole H3 for bolt fastening by way of illustration. The bolt may be inserted into each bolt hole H3, and the total number of bolts may be, for example, 13. The bolt is a non-adjustable fixed type.

A second shim offset block (not shown) may be also installed. The second shim offset block may be installed between the reinforcements RR of the second die block 120'. The second offset block is configured to adjust the offset or the distance between the die lip and the end of the second shim 133' by pulling the second shim 133' in a direction opposite the die lip.

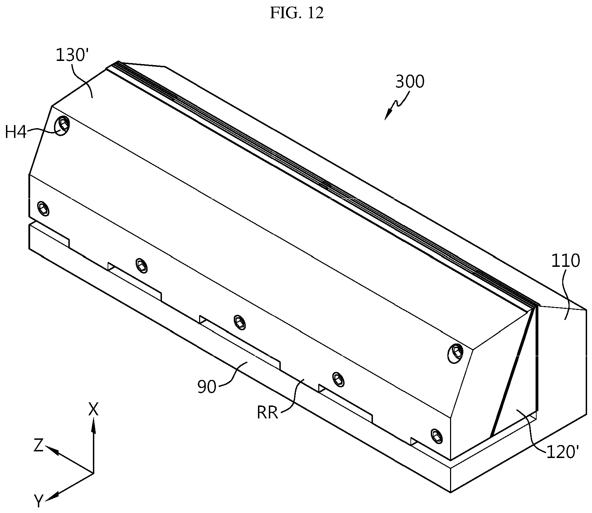

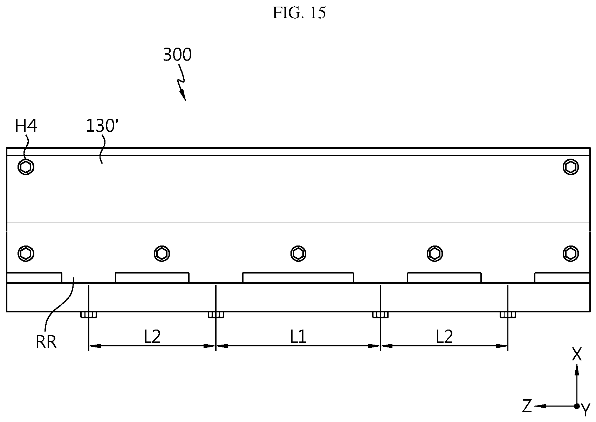

Subsequently, according to the step S4 of FIG. 8 and FIG. 12, the assembly of the dual slot die coater 300 is completed by assembling the third die block 130' on the second shim 133'. FIG. 15 is a front view of the third die block 110 when viewed from the Y axis direction.

The third die block 130' may be assembled with the second die block 120'. A bolt (not shown) may be used to assemble the third die block 130' with the second die block 120'. FIGS. 12 and 15 show that the third die block 130' may have a bolt hole H4 for bolting by way of illustration. The bolt may be inserted into each bolt hole H4 and the total number of bolts may be, for example, 22. The bolt is also a non-adjustable fixed type. All the bolts used in the dual slot die coater 300 of the present disclosure are a non-adjustable fixed type.

As described above, the third die block 130' also has the reinforcement RR for intermittent contact between the lower surface and the base 90. Likewise, a plurality of reinforcements RR is provided in the lengthwise direction of the dual slot die coater 300. The reinforcements RR may be symmetrical in the lengthwise direction with respect to the center in the lengthwise direction. The distance L1 between the reinforcements RR at the central area among the plurality of reinforcements RR may be larger than the distance L2 between the other reinforcements RR. According to this configuration, it is possible to control the coating gap at the center better by increasing the bending at the center.

A bolt (not shown) may be vertically installed into the contact surface between the third die block 130' and the base 90. Since the contact surface is formed at the reinforcement RR, the bolt may be installed into the reinforcement RR. As shown in FIGS. 9 to 11, the base 90 corresponding to the reinforcement RR may have a bolt hole HR' for bolting.

Subsequently, the assembled condition is determined according to the step S5 of FIG. 8. When an assembly defect is detected (NO in FIG. 8), the method reverts to the first step to adjust the assembly defect item (S6 in FIG. 8). However, in the dual slot die coater 300 of the present disclosure, since all the bolts are a fixed type and the die lips 111, 121, 131 are automatically aligned by simply assembling the first to third die blocks 110, 120', 130', it is possible to avoid an assembly defect (YES in FIG. 8), and complete the final assembly by single assembly (step S7 in FIG. 8).

Since the dual slot die coater 300 of the present disclosure uses 1 contact surface fixing, the dual slot die coater 300 can be assembled through simple manual operation and does not need to adjust in reliance on the operator's skills. The use of the fixed fastening improves the assembly quality and reproducibility. Additionally, the space for bending is formed between the reinforcements RR.

According to the dual slot die coaters 100, 200, 300 of the present disclosure having this configuration, double layer coating may be formed on the substrate 170 by continuously bringing the first coating solution 50 and the second coating solution 60 into contact with the surface of the substrate 170 to be coated while moving the substrate 170 by rotating the rotatable coating roll 160, for example, in the clockwise direction on top of the dual slot die coaters 100, 200, 300. Alternatively, pattern coating may be intermittently formed on the substrate 170 by performing the supply of the first coating solution 50 and stop the supply and the supply of the second coating solution 60 and stop the supply in an alternating manner.

In a specific example, the positive electrode active material slurry may be coated using the slot die coaters 100, 200, 300 of the present disclosure to manufacture positive electrodes of secondary batteries. The positive electrode includes a current collector and a positive electrode active material layer on the surface of the current collector. The current collector may include electrically conductive materials, for example, Al and Cu, and a suitable one may be used according to the polarity of the current collector electrode known in the field of secondary batteries. The positive electrode active material layer may further include at least one of a plurality of positive electrode active material particles, a conductive material or a binder. Additionally, the positive electrode may further include various types of additives to supplement or improve the electrical and chemical properties.

The active material is not limited to a particular type and may include any type of active material that can be used for positive electrode active materials of lithium ion secondary batteries. Its non-limiting example may include at least one of layered compounds or compounds with one or more transition metal substitution such as lithium manganese composite oxide (LiMn₂O₄, LiMnO₂), lithium cobalt oxide (LiCoO₂), lithium nickel oxide (LiNiO₂); lithium manganese oxide of formula Li₁₊ₓMn₂₋ₓO₄ (x is 0 ~ 0.33), LiMnO₃, LiMn₂O₃, LiMnO₂; lithium copper oxide (Li₂CuO₂); vanadium oxide, for example, LiV₃O₈, LiV₃O₄, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01 ~ 0.3); lithium manganese composite oxide represented by formula LiMn₂₋ₓMₓO₂ (M = Co, Ni, Fe, Cr, Zn or Ta, x = 0.01 ~ 0.1) or Li₂Mn₃MO₈ (M = Fe, Co, Ni, Cu or Zn); LiMn₂O₄ with partial substitution of alkali earth metal ion for Li in the formula; disulfide compounds; or Fe₂(MoO₄)₃. In the present disclosure, the positive electrode may include a solid electrolyte material, for example, at least one of a polymer based solid electrolyte, an oxide based solid electrolyte or a sulfide based solid electrolyte.

The conductive material may be typically added in an amount of 1 wt% to 20 wt% based on the total weight of the mixture including the active material. The conductive material is not limited to a particular type, and may include any material having conductive properties without causing any chemical change to the corresponding battery, for example, at least one selected from graphite, for example, natural graphite or artificial graphite; carbon black, for example, carbon black, acetylene black, ketjen black, channel black, furnace black, lamp black, thermal black; conductive fibers, for example, carbon fibers or metal fibers; metal powder, for example, carbon fluoride, aluminum and nickel powder; conductive whiskers, for example, zinc oxide and potassium titanate; conductive metal oxide, for example, titanium oxide; and conductive materials, for example, polyphenylene derivatives.

The binder is not limited to a particular type and may include any material which assists in binding the active material and the conductive material together and binding to the current collector, for example, polyvinylidene fluoride polyvinylalcohol, carboxymethylcellulose (CMC), starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, styrene butadiene rubber, fluoro rubber and a variety of copolymers thereof. The binder may be typically included in the range of 1 wt% to 30 wt% or 1 wt% to 10 wt% based on 100 wt% of the electrode layer.

The negative electrode active material slurry may be coated using the slot die coaters 100, 200, 300 of the present disclosure to manufacture negative electrodes of secondary batteries. The negative electrode includes a current collector and a negative electrode active material layer on the surface of the current collector. The negative electrode active material layer may further include at least one of a plurality of negative electrode active material particles, a conductive material or a binder. Additionally, the negative electrode may further include a variety of additives to enhance or improve the electrical and chemical properties.

The negative electrode active material may include carbon materials, for example, graphite, amorphous carbon, diamond-like carbon, fullerene, carbon nanotubes and carbon nanohorns, lithium metal materials, alloy based materials, for example, silicon or tin alloy based materials, oxide based materials, for example, Nb₂O₅, Li₅Ti₄O₁₂, TiO₂, or a composite thereof. For the details of the conductive material, the binder and the current collector of the negative electrode, reference may be made to the description of the positive electrode.

The active material slurry including the positive electrode active material or the negative electrode active material has very high viscosity. For example, the viscosity may be 1000 cps or more. The viscosity of the active material slurry used to form electrodes of secondary batteries may be 2000 cps to 30000 cps. For example, the viscosity of the negative electrode active material slurry may be 2000 cps to 4000 cps. The viscosity of the positive electrode active material slurry may be 8000 cps to 30000 cps. Since it is necessary to coat the coating solution having the viscosity of 1200 cps or more, the slot die coaters 100, 200, 300 of the present disclosure is different in structure from devices for coating any other coating solution having lower viscosity, for example, an ordinary resin solution such as a photosensitive emulsion, a magnetic solution, an antireflection or antiglare solution, a solution for enlarging the field of view and a pigment solution for a color filter and cannot be arrived at by design modification. Since the slot die coaters 100, 200, 300 of the present disclosure are, for example, designed to coat active material slurries that may comprise active materials having the average particle size of about 10 *µ*m, its structure is different from those of devices for coating any other coating solution including no particles having the above-described particle size, and cannot be arrived at by design modification. The slot die coaters 100, 200, 300 of the present disclosure are optimal for manufacturing of electrodes.

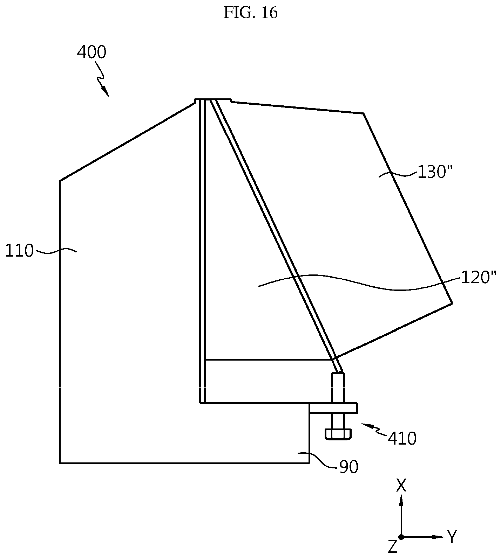

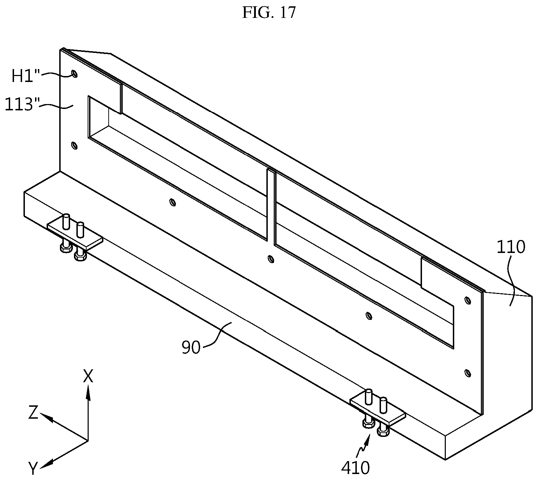

FIG. 16 is a cross-sectional view of the dual slot die coater according to comparative example, and FIGS. 17 to 20 are diagrams showing each assembly step of the dual slot die coater according to comparative example.

Referring to FIG. 16, in the dual slot die coater 400 according to comparative example, the vertical length of the second die block 120" and the third die block 130" is shorter than the vertical length of the first die block 110. In this state, when the front end of the second die block 120" and the front end of the first die block 110 are in alignment, the lower surface of the second die block 120" and the upper surface of the base 90 are spaced apart from each other to form an empty space between the lower surface of the second die block 120" and the upper surface of the base 90. This space is such that the upper surface is formed by the lower surface of the second die block 120", the lower surface is formed by the upper surface of the base 90, the front surface is open, the rear surface is formed by the front surface of the first die block 110, and the left and right sides are open. That is, in comparative example, the second die block 120" and the third die block 130" are in noncontact with the base 90.

Comparative example needs a space for bending according to the characteristics of the bending die, and to form this space, two of the three die blocks 110, 120", 130" need to have a space in the alignment direction, so the resulting suspended structure adversely affects alignment.

By this reason, comparative example further includes a die lip adjustment bolt 410 for die block alignment. The die lip adjustment bolt 410 is a push/pull bolt, and requires caution due to the reliance on the operator's skills and deformation risks.

To compare it with the present disclosure, the assembly of the dual slot die coater 400 of comparative example according to the flowchart of FIG. 8 will be described below with reference to FIGS. 17 to 20.

The first die block 110 integrally formed with the base 90 is prepared, and according to the step S1 of FIG. 8 and FIG. 17, the first shim 113" is assembled on the first die block 110.

A bolt (not shown) may be used to assemble the first shim 113" and the first die block 110. The drawing shows that the first shim 113" may have a bolt hole H1" for bolting by way of illustration. The bolt may be inserted into each bolt hole H1", and the total number of bolts may be, for example, 22. However, as opposed to the present disclosure, the bolt is an adjustable type that needs to be adjusted.

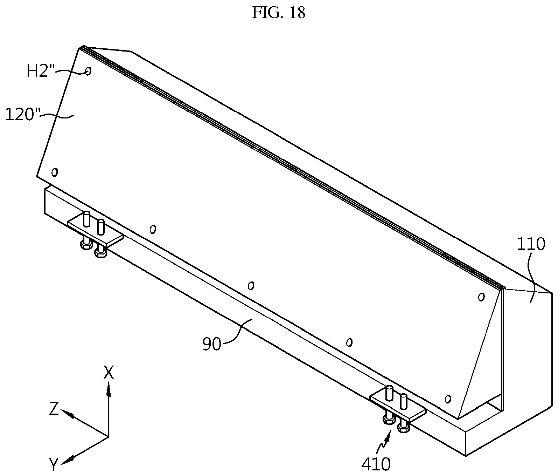

Subsequently, according to the step S2 of FIG. 8 and FIG. 18, the second die block 120" is assembled on the first shim 113".

The second die block 120" may be assembled with the first die block 110. A bolt (not shown) may be used to assemble the second die block 120" with the first die block 110. The total number of bolts may be, for example, 22. However, as opposed to the present disclosure, the bolt is an adjustable type that needs to be adjusted. The second die block 120" does not contact the base 90, and has a suspended structure.

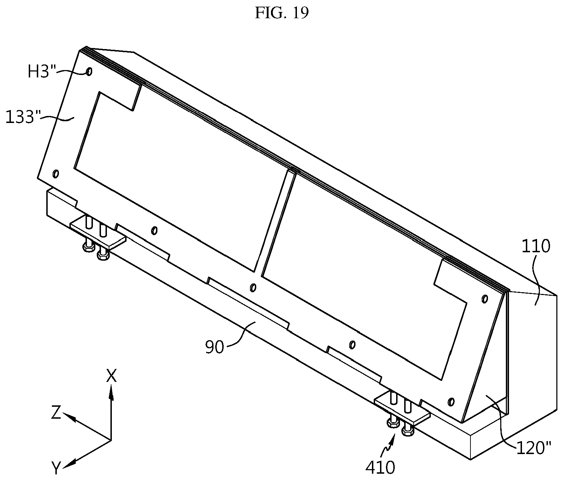

Subsequently, according to the step S3 of FIG. 8 and FIG. 19, the second shim 133" is assembled on the second die block 120". A bolt (not shown) may be used to assemble the second shim 133" and the second die block 120". The drawing shows that the second shim 125" may have a bolt hole H3" for bolting by way of illustration. The bolt may be inserted into each bolt hole H3", and the total number of bolts may be, for example, 19. As opposed to the present disclosure, the bolt is an adjustable type that needs to be adjusted. Additionally, as opposed to the present disclosure, the die lip adjustment bolt 410 is needed.

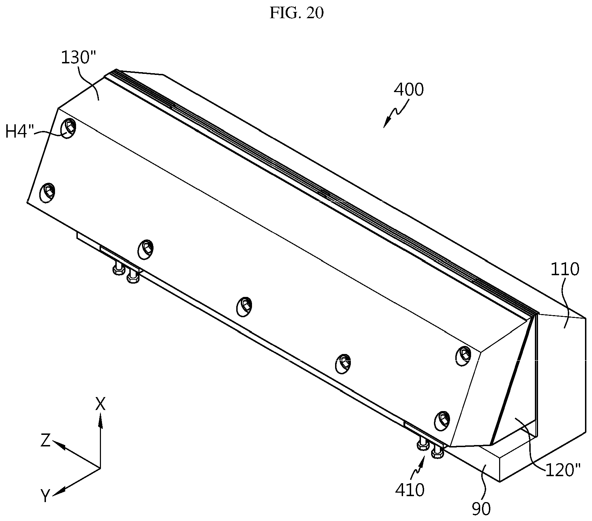

Subsequently, according to the step S4 of FIG. 8 and FIG. 20, the third die block 130" is assembled on the second shim 133".

The third die block 130" may be assembled with the second die block 120". A bolt (not shown) may be used to assemble the third die block 130" and the second die block 120". The drawing shows that the third die block 130" may have a bolt hole H4" for bolting by way of illustration. The total number of bolts may be, for example, 20. As opposed to the present disclosure, the bolt is an adjustable type that needs to be adjusted. The third die block 130" does not contact the base 90 and has a suspended structure.

Subsequently, the assembled condition is determined according to the step S5 of FIG. 8. When an assembly defect is detected, the method reverts to the first step to adjust the assembly defect item according to the step S6 of FIG. 8.

In the case of the dual slot die coater 400 of comparative example, when assembled according to the flowchart of FIG. 8, one or two assembly defects on average occur. It takes 120 min to adjust each assembly defect item. The dual slot die coater 300 of the present disclosure is finally assembled by only one assembly, but the assembly time takes a long time.

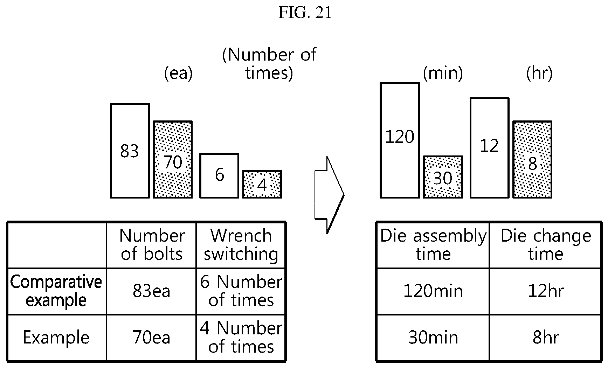

FIG. 21 shows the die change time shortening effect through die block structure/simple assembly design in another embodiment of the present disclosure compared to comparative example.

In the die block assembly process according to the flowchart of FIG. 8, as described above with reference to FIGS. 17 to 20, 22 bolts are used in the assembly of the first shim 113" of comparative example, 22 bolts are used in the assembly of the second die block 120", 19 bolts are used in the assembly of the second shim 133" and 20 bolts are used in the assembly of the third die block 130". Accordingly, it requires 83 bolts in total and wrench switching 6 times. The bolts are all an adjustable type as mentioned above. When adjusting the conditions in the event of an assembly defect, the die assembly time is 120 minutes, and the die change time is 12 hours.

In contrast, in the die assembly process according to FIG. 8, as described above with reference to FIGS. 9 to 12, 13 bolts (ea) are used to assemble the first shim 113' of the dual slot die coater 300 according to another embodiment of the present disclosure, 22 bolts are used to assemble the second die block 120', 13 bolts are used to assemble the second shim 133', and 22 bolts are used to assemble the third die block 130'. Accordingly, the total number of bolts is 70, and the number of times wrench switching is necessary is 4. Compared to comparative example, it is possible to reduce the number of bolts and the number of times of wrench switching. In an embodiment of the present disclosure, all the bolts are a fixed type. Accordingly, compared to comparative example, there is no time loss caused by adjustment, it does not rely on the operator's skills, and reproducibility does not reduce.

The embodiment of the present disclosure does not have an assembly defect, so the die assembly time is 30 min. The die change time is 8 hr. As described above, compared to comparative example, an embodiment has 75% reduction in the die block assembly time and 25% reduction in the die change time.

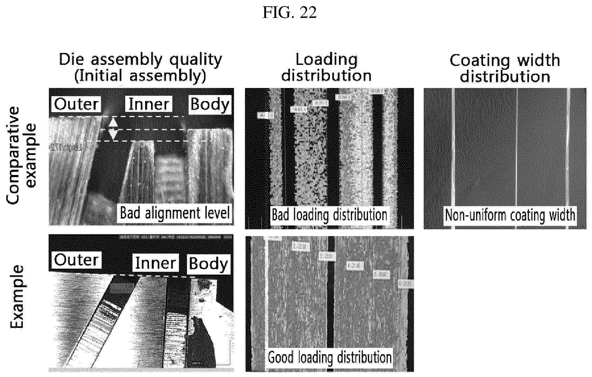

FIG. 22 shows the electrode quality improvement effect through assembly quality improvement in another embodiment of the present disclosure compared to comparative example.

In the case of the dual slot die coater 300 according to another embodiment of the present disclosure, die lip alignment is found good, but in the case of comparative example, the alignment level is found low. By this reason, according to comparative example, there is a loading distribution defect and non-uniform coating width. However, according to an embodiment of the present disclosure, when the die assembly is quality improved, loading distribution is good and close to the design value, leading to improved electrode quality.

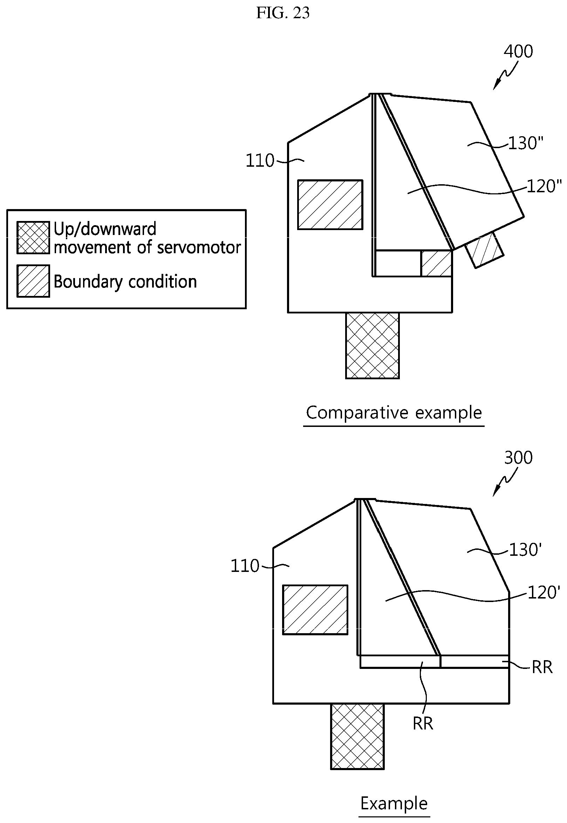

FIG. 23 is a diagram for analyzing the influence of the operation of the servomotor after bolting in comparative example and another embodiment of the present disclosure.

Evaluation is conducted by connecting the servomotor as the pressing element 190 to the bottom of the base 90 of the dual slot die coater 400 according to comparative example and the dual slot die coater 300 according to the present disclosure.

The dual slot die coater 400 of comparative example has a structure in which the second die block 120" and the third die block 130" are suspended, causing die bending through the servomotor. The dual slot die coater 300 of an embodiment of the present disclosure has the bending space or the space between the reinforcements RR of the second die block 120'and the third die block 130', causing die bending through the servomotor. The working load of the servomotor is 4.5kN in comparative example and 6kN (when moving 40 *µ*m) in example.

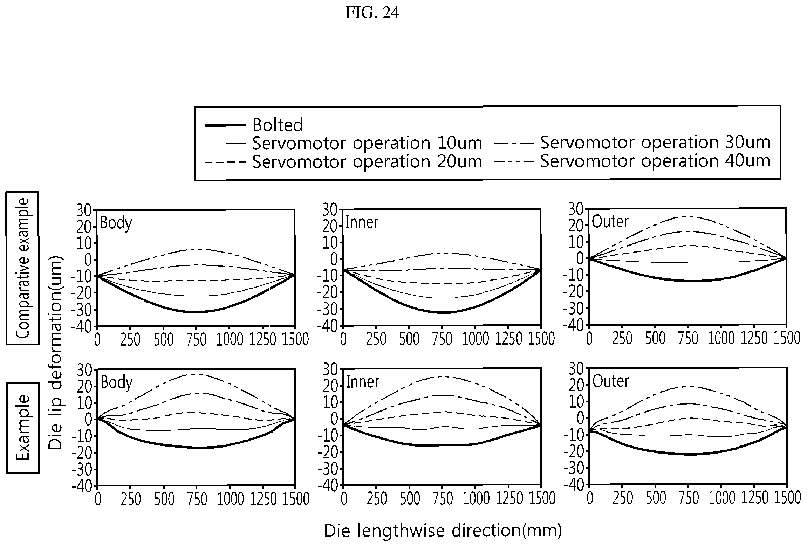

FIG. 24 is a graph showing the coating gap directional deformation comparison *(*µm) by the operation of the servomotor in comparative example and another embodiment of the present disclosure.

In the embodiments and comparative example, the movement amount of the servomotor is reflected. After bolting, deformation in the coating gap direction at the center in the lengthwise direction is a negative value, and as the servomotor working length increases, the deformation in the coating gap direction increases to a positive value. When the deformation deviation of each die block is small after bolting, it is determined that it will be easy to correct the gap deviation using the servomotor.

In comparative example, deformation by the servomotor is more severe in the third die block 130" than in the first die block 110 and the second die block 120". It is because the third die block 130" does not contact the base 90 and has a suspended structure.

However, in an embodiment of the present disclosure, the deformation by the servomotor is almost similar over all the die blocks 110, 120', 130'. That is, it can be seen that during die bending for widthwise direction loading control, deformation of each of the first to third die blocks is more uniform in an embodiment than in comparative example. Since the second die block 120' and the third die block 130' are kept in contact with the base 90 while allowing the deformation of each die block 110, 120', 130' through the bending space, it is possible to allow deformation with high uniformity.

Meanwhile, although this embodiment describes coating the coating solution in two layers or pattern coating by supplying the coating solution in an alternating manner, it is obvious that the present disclosure may include three or more slots to simultaneously coat in three or more layers.

Meanwhile, the terms indicating the directions such as front, rear, upper, lower, left and right are used herein, but these terms are for convenience of description, and it is obvious to those skilled in the art that the terms may be subject to change depending on the position of the elements or an observer.

**[Description of Reference Numerals]**

| | | | |
|---|---|---|---|
| 50: | First coating solution | 60: | Second coating solution |
| 90: | Base | 100, 200, 300: | Dual slot die coater |
| 101: | First slot | 101a: | First exit port |
| 102: | Second slot | 102a: | Second exit port |
| 110: | First die block | 111: | First die lip |
| 112: | First manifold | 113, 113': | First shim |
| 120, 120': | Second die block | 121: | Second die lip |
| 130, 130': | Third die block | 131: | Third die lip |
| 132: | Second manifold | 133, 133': | Second shim |
| 141, 142: | Bolt | 160: | Coating roll |
| 170: | Substrate | 190: | Pressing element |
| RR: | Reinforcement | | |

## Claims

1. A dual slot die coater comprising a first slot (101) and a second slot (102) to deliver a coating solution in an opposite direction of gravity, the dual slot die coater comprising:
a first die block (110) vertically installed and integrally formed with a base (90) at a rear of an upper surface of the base (90);
a second die block positioned in contact with the base (90) in front of the first die block (110) to form the first slot (101) between the second die block and the first die block (110); and
a third die block positioned in contact with the base (90) in front of the second die block to form the second slot (102) between the third die block and the second die block, **characterized in that** a lower surface of the second die block and a lower surface of the third die block are in contact with a top surface of the base (90) such that the top surface is completely covered.

2. A dual slot die coater comprising a first slot (101) and a second slot (102) to deliver a coating solution in an opposite direction of gravity, the dual slot die coater comprising:
a first die block (110) vertically installed and integrally formed with a base (90) at a rear of an upper surface of the base (90);
a second die block positioned in contact with the base (90) in front of the first die block (110) to form the first slot (101) between the second die block and the first die block (110); and
a third die block positioned in contact with the base (90) in front of the second die block to form the second slot (102) between the third die block and the second die block, **characterized in that** a lower surface of the second die block and a lower surface of the third die block are in intermittent contact with a top surface of the base (90),
wherein reinforcements (RR) are provided on a lower surface of the second die block and of the third die block for intermittent contact with the base (90) and a bending space is formed between the reinforcements (RR).

3. The dual slot die coater according to claim 2, wherein a pressing element (190) is connected to a bottom of the base (90).

4. The dual slot die coater according to claim 3, wherein the pressing element (190) is a servomotor.

5. The dual slot die coater according to any of claims 1 or 2, further comprising:
a first shim between the first die block and the second die block to form the first slot and a second shim between the second die block and the third die block to form the second slot, wherein the first shim and the second shim have an open portion which is at least cut at an area.

6. The dual slot die coater according to claim 2, wherein a servomotor is connected to a center of a bottom of the base (90) to deform the bending space.

7. The dual slot die coater according to claim 2, wherein the plurality of reinforcements (RR) is in a lengthwise direction of the dual slot die coater.

8. The dual slot die coater according to claim 7, wherein the plurality of reinforcements (RR) is symmetrical in the lengthwise direction with respect to a center in the lengthwise direction of the dual slot die coater.

9. The dual slot die coater according to claim 8, wherein a distance between the reinforcements (RR) at a central area among the plurality of reinforcements (RR) is larger than a distance between the other reinforcements (RR).

10. The dual slot die coater according to any of claims 1 or 2, wherein the first die block (110) includes a first manifold (112) which accommodates a first coating solution (50) and is in communication with the first slot (101), and the third die block includes a second manifold (132) which accommodates a second coating solution (60) and is in communication with the second slot (102).

11. The dual slot die coater according to any of claims 1 or 2, wherein a bolt (141) is vertically installed into a contact surface between the base (90) and the second die block (120), and a bolt (142) is vertically installed into a contact surface between the base (90) and the third die block (130).

12. The dual slot die coater according to any of claims 1 or 2, wherein the first slot (101) is perpendicular to the base (90).

## Patentansprüche

1. EZweifachschlitz-Düsenbeschichtungseinheit umfassend einen ersten Schlitz (101) und einen zweiten Schlitz (102), um eine Beschichtungslösung in einer entgegengesetzten Richtung der Schwerkraft freizusetzen, wobei die Zweifachschlitz-Düsenbeschichtungseinheit umfasst:
einen ersten Düsenblock (110), welcher vertikal installiert ist und integral mit einer Basis (90) an einem hinteren Ende einer oberen Fläche der Basis (90) gebildet ist;
einen zweiten Düsenblock, welcher in Kontakt mit der Basis (90) vor dem ersten Düsenblock (110) positioniert ist, um den ersten Schlitz (101) zwischen dem zweiten Düsenblock und dem ersten Düsenblock (110) zu bilden; und
einen dritten Düsenblock, welcher in Kontakt mit der Basis (90) vor dem zweiten Düsenblock positioniert ist, um den zweiten Schlitz (102) zwischen dem dritten Düsenblock und dem zweiten Düsenblock zu bilden,
**dadurch gekennzeichnet, dass** eine untere Fläche des zweiten Düsenblocks und eine untere Fläche des dritten Düsenblocks derart in Kontakt mit einer oberen Fläche der Basis (90) stehen, dass die obere Fläche komplett abgedeckt ist.

2. Zweifachschlitz-Düsenbeschichtungseinheit umfassend einen ersten Schlitz (101) und einen zweiten Schlitz (102), um eine Beschichtungslösung in einer entgegengesetzten Richtung der Schwerkraft freizusetzen, wobei die Zweifachschlitz-Düsenbeschichtungseinheit umfasst:
einen ersten Düsenblock (110), welcher vertikal installiert ist und integral mit einer Basis (90) an einem hinteren Ende einer oberen Fläche der Basis (90) gebildet ist;
einen zweiten Düsenblock, welcher in Kontakt mit der Basis (90) vor dem ersten Düsenblock (110) positioniert ist, um den ersten Schlitz (101) zwischen dem zweiten Düsenblock und dem ersten Düsenblock (110) zu bilden; und
einen dritten Düsenblock, welcher in Kontakt mit der Basis (90) vor dem zweiten Düsenblock positioniert ist, um den zweiten Schlitz (102) zwischen dem dritten Düsenblock und dem zweiten Düsenblock zu bilden,
**dadurch gekennzeichnet, dass** eine untere Fläche des zweiten Düsenblocks und eine untere Fläche des dritten Düsenblocks intermittierend mit einer oberen Fläche der Basis (90) in Kontakt stehen,
wobei Verstärkungen (RR) an einer unteren Fläche des zweiten Düsenblocks und des dritten Düsenblocks für einen intermittierenden Kontakt mit der Basis (90) bereitgestellt sind und ein gebogener Raum zwischen den Verstärkungen (RR) gebildet ist.

3. Zweifachschlitz-Düsenbeschichtungseinheit nach Anspruch 2, wobei ein Druckelement (190) mit einer Unterseite der Basis (90) verbunden ist.

4. Zweifachschlitz-Düsenbeschichtungseinheit nach Anspruch 3, wobei das Druckelement (190) ein Servomotor ist.

5. Zweifachschlitz-Düsenbeschichtungseinheit nach einem der Ansprüche 1 oder 2, ferner umfassend:
ein erstes Plättchen zwischen dem ersten Düsenblock und dem zweiten Düsenblock, um den ersten Schlitz zu bilden, und ein zweites Plättchen zwischen dem zweiten Düsenblock und dem dritten Düsenblock, um den zweiten Schlitz zu bilden, wobei das erste Plättchen und das zweite Plättchen einen offenen Abschnitt aufweisen, welcher wenigsten in einem Bereich geschnitten ist.

6. Zweifachschlitz-Düsenbeschichtungseinheit nach Anspruch 2, wobei ein Servomotor mit einem Zentrum einer Unterseite der Basis (90) verbunden ist, um den gebogenen Raum zu deformieren.

7. Zweifachschlitz-Düsenbeschichtungseinheit nach Anspruch 2, wobei sich die Mehrzahl von Verstärkungen (RR) in einer Längsrichtung der Zweifachschlitz-Düsenbeschichtungseinheit befindet.

8. Zweifachschlitz-Düsenbeschichtungseinheit nach Anspruch 7, wobei die Mehrzahl von Verstärkungen (RR) in der Längsrichtung symmetrisch ist, in Bezug auf ein Zentrum in der Längsrichtung der Zweifachschlitz-Düsenbeschichtungseinheit.

9. Zweifachschlitz-Düsenbeschichtungseinheit nach Anspruch 8, wobei eine Distanz zwischen den Verstärkungen (RR) in einem Zentrumsbereich unter der Mehrzahl von Verstärkungen (RR) größer ist als eine Distanz zwischen den anderen Verstärkungen (RR).

10. Zweifachschlitz-Düsenbeschichtungseinheit nach einem der Ansprüche 1 oder 2, wobei der erste Düsenblock (110) einen ersten Verteiler (112) umfasst, welcher eine erste Beschichtungslösung (50) unterbringt und mit dem ersten Schlitz (101) in Kommunikation ist, und der dritte Düsenblock einen zweiten Verteiler (132) umfasst, welcher eine zweite Beschichtungslösung (60) unterbringt und mit dem zweiten Schlitz (102) in Kommunikation ist.

11. Zweifachschlitz-Düsenbeschichtungseinheit nach einem der Ansprüche 1 oder 2, wobei ein Bolzen (141) vertikal in einer Kontaktfläche zwischen der Basis (90) und dem zweiten Düsenblock (120) installiert ist und ein Bolzen (142) vertikal in einer Kontaktfläche zwischen der Basis (90) und dem dritten Düsenblock (130) installiert ist.

12. Zweifachschlitz-Düsenbeschichtungseinheit nach einem der Ansprüche 1 oder 2, wobei der erste Schlitz (101) senkrecht zu der Basis (90) ist.

## Revendications

1. Dispositif d'enduction à filière à deux fentes comportant une première fente (101) et une deuxième fente (102) pour distribuer une solution d'enduction dans une direction opposée à la gravité, le dispositif d'enduction à filière à deux fentes comprenant :
un premier bloc de filière (110) installé verticalement et formé d'un seul tenant avec une base (90) à l'arrière d'une surface supérieure de la base (90) ;
un deuxième bloc de filière positionné au contact de la base (90) devant le premier bloc de filière (110) pour former la première fente (101) entre le deuxième bloc de filière et le premier bloc de filière (110) ; et
un troisième bloc de filière positionné au contact de la base (90) devant le deuxième bloc de filière pour former la deuxième fente (102) entre le troisième bloc de filière et le deuxième bloc de filière, **caractérisé en ce qu'**une surface inférieure du deuxième bloc de filière et une surface inférieure du troisième bloc de filière sont en contact avec une surface supérieure de la base (90) de sorte que la surface supérieure soit complètement recouverte.

2. Dispositif d'enduction à filière à deux fentes comportant une première fente (101) et une deuxième fente (102) pour distribuer une solution d'enduction dans une direction opposée à la gravité, le dispositif d'enduction à filière à deux fentes comprenant :
un premier bloc de filière (110) installé verticalement et formé d'un seul tenant avec une base (90) à l'arrière d'une surface supérieure de la base (90) ;
un deuxième bloc de filière positionné au contact de la base (90) devant le premier bloc de filière (110) pour former la première fente (101) entre le deuxième bloc de filière et le premier bloc de filière (110) ; et
un troisième bloc de filière positionné au contact de la base (90) devant le deuxième bloc de filière pour former la deuxième fente (102) entre le troisième bloc de filière et le deuxième bloc de filière, **caractérisé en ce qu'**une surface inférieure du deuxième bloc de filière et une surface inférieure du troisième bloc de filière sont en contact intermittent avec une surface supérieure de la base (90),
dans lequel des renforts (RR) sont prévus sur une surface inférieure du deuxième bloc de filière et du troisième bloc de filière pour assurer un contact intermittent avec la base (90) et un espace de flexion est formé entre les renforts (RR).

3. Dispositif d'enduction à filière à deux fentes selon la revendication 2, dans lequel un élément de pression (190) est relié à un fond de la base (90).

4. Dispositif d'enduction à filière à deux fentes selon la revendication 3, dans lequel l'élément de pression (190) est un servomoteur.

5. Dispositif d'enduction à filière à deux fentes selon l'une quelconque des revendications 1 ou 2, comprenant en outre :
une première cale entre le premier bloc de filière et le deuxième bloc de filière pour former la première fente et une deuxième cale entre le deuxième bloc de filière et le troisième bloc de filière pour former la deuxième fente, dans lequel la première cale et la deuxième cale présentent une partie ouverte qui est au moins coupée au niveau d'une zone.

6. Dispositif d'enduction à filière à deux fentes selon la revendication 2, dans lequel un servomoteur est relié à un centre d'un fond de la base (90) pour déformer l'espace de flexion.

7. Dispositif d'enduction à filière à deux fentes selon la revendication 2, dans lequel la pluralité de renforts (RR) est dans une direction longitudinale du dispositif d'enduction à filière à deux fentes.

8. Dispositif d'enduction à filière à deux fentes selon la revendication 7, dans lequel la pluralité de renforts (RR) est symétrique dans la direction longitudinale par rapport à un centre dans la direction longitudinale du dispositif d'enduction à filière à deux fentes.

9. Dispositif d'enduction à filière à deux fentes selon la revendication 8, dans lequel une distance entre les renforts (RR) au niveau d'une zone centrale parmi la pluralité de renforts (RR) est supérieure à une distance entre les autres renforts (RR).

10. Dispositif d'enduction à filière à deux fentes selon l'une quelconque des revendications 1 ou 2, dans lequel le premier bloc de filière (110) comporte un premier distributeur (112) qui contient une première solution d'enduction (50) et est en communication avec la première fente (101), et le troisième bloc de filière comporte un deuxième distributeur (132) qui contient une deuxième solution d'enduction (60) et est en communication avec la deuxième fente (102).

11. Dispositif d'enduction à filière à deux fentes selon l'une quelconque des revendications 1 ou 2, dans lequel un boulon (141) est installé verticalement dans une surface de contact entre la base (90) et le deuxième bloc de filière (120), et un boulon (142) est installé verticalement dans une surface de contact entre la base (90) et le troisième bloc de filière (130).

12. Dispositif d'enduction à filière à deux fentes selon l'une quelconque des revendications 1 ou 2, dans lequel la première fente (101) est perpendiculaire à la base (90).
